# EUROPÄISCHE PATENTSCHRIFT

(11) **EP 3 774 276 B1**
(45) Veröffentlichungstag und Bekanntmachung des Hinweises auf die Patenterteilung: **21.07.2021**
(21) Anmeldenummer: 19716883.4
(22) Anmeldetag: 08.04.2019
(51) Int. Cl.: B29C 48/70, B29C 48/30, B29C 48/36, B29C 48/07, B29C 48/495, B29C 48/25

(54) **EXTRUSIONSVORRICHTUNG MIT WENIGSTENS EINER LOCHPLATTE**
EXTRUSION DEVICE HAVING AT LEAST ONE PERFORATED PLATE
DISPOSITIF D'EXTRUSION DOTÉ D'AU MOINS UNE PLAQUE PERFORÉE

(30) Priorität: 16.04.2018 DE 102018108964
(43) Veröffentlichungstag der Anmeldung: 17.02.2021
(73) Patentinhaber: KraussMaffei Extrusion GmbH, 30625 Hannover (DE)
(72) Erfinder: REINEKE, Frank, 30952 Ronnenberg (DE)
(74) Vertreter: Krauss, Philipp
(86) Internationale Anmeldenummer: PCT/EP2019/058770
(87) Internationale Veröffentlichungsnummer: WO 2019/201637

(56) Entgegenhaltungen:
- WO-A1-2012/095211
- JP-A- S5 350 270
- JP-A- S5 948 137
- JP-A- H02 223 425
- JP-A- 2006 205 418
- US-A1- 2002 107 326
- US-A1- 2003 111 762
- US-A1- 2016 176 230

## Beschreibung

Die Erfindung betrifft eine Extrusionsvorrichtung aufweisend wenigstens einen Extruder mit einem Schneckenzylinder, einer im Schneckenzylinder drehbar gelagerten Schneckenwelle und einem Extruderaustritt, ein Spritzwerkzeug mit einer die Querschnittskontur des Extrudats bestimmenden Austrittsdüse, sowie einen zwischen dem Extruderaustritt des wenigstens einen Extruders und der Austrittsdüse des Spritzwerkzeugs angeordneten Extrusionskopf.

Aus der WO 2016/192988 A1 ist beispielsweise eine Reifenstreifen-Extrusionsvorrichtung zum Herstellen von Lauf- und/oder Seitenstreifen für Reifen bekannt, mit einem ersten Extruder, der zumindest eine erste Schnecke mit einer ersten Schnecken-Längsachse aufweist, einem zweiten Extruder, der zumindest eine zweite Schnecke mit einer zweiten Schnecken-Längsachse aufweist, einem dritten Extruder, der zumindest eine dritte Schnecke mit einer dritten Schnecken-Längsachse aufweist, zumindest einem vierten Extruder, der zumindest eine vierte Schnecke mit einer vierten Schnecken-Längsachse aufweist, und einem Extrusionskopf mit einem Kopfgehäuse, das zumindest vier Zuführöffnungen aufweist, die mit jeweils einem zugeordneten Extruder zum Zuführen von Extrusionsmaterial verbunden sind, und einem Spritzwerkzeug zum Formen eines Extrusionsstrangs aus den Extrusionsmaterialien, das mit dem Kopfgehäuse verbunden ist, eine Austrittsöffnung besitzt und so angeordnet ist, dass durch die Zuführöffnungen zugeführtes Extrusionsmaterial entlang eines jeweiligen Materialpfads zur Austrittsöffnung leitbar ist.

Aus dem Stand der Technik sind verschiedene Extrusionsvorrichtungen bekannt. ,JP 2006 205 418 A beschreibt einen Extruder, der in der Lage ist, die Unregelmäßigkeit der Fließgeschwindigkeitsverteilung eines zu extrudierenden Materials auszugleichen. Hierzu ist am Ende des Zylinderrohrs ein Sieb vorgesehen, an dem eine mit einer Unterbrecherplatte ausgestattete Kühlplatte angeordnet ist. Durchgangslöcher an der zentralen Seite der Unterbrecherplatte sind tiefer als Durchgangslöcher an der äußeren

Umfangsseite der Unterbrecherplatte. Die US 2016/176 230 A1 offenbart eine extrudierte Platte mit mindestens einem Streifenabschnitt, der einen ersten farbigen Abschnitt an einer Außenfläche eines Kernabschnitts der Platte umfasst, einen zweiten farbigen Abschnitt, der sich vom ersten farbigen Abschnitt in den Kern erstreckt, und einen dritten farbigen Abschnitt, der sich erstreckt weiter in den Kern hinein von dem zweiten gefärbten Abschnitt und mindestens einem Harzabschnitt, der einen ersten Basisabschnitt, der direkt zwischen dem zweiten gefärbten Abschnitt und der Außenfläche angeordnet ist, und einen zweiten Basisabschnitt, der direkt zwischen dem dritten gefärbten Abschnitt und der Außenfläche angeordnet ist, aufweist.

Die US 2002 / 107 326 A1 zeigt eine Brecherplatte, die in den Weg eines Polymerschmelzestroms gebracht wird. Die Brecherplatte hat einen kegelförmigen Mittelabschnitt mit Löchern darin, wobei sich der kegelförmige Mittelabschnitt in einer stromabwärtigen Richtung des Polymerflusses erstreckt. Der kegelförmige Mittelabschnitt verringert das stromabwärtige Schmelzvolumen und fördert den Übergang von einem umgekehrten Geschwindigkeitsprofil zu einem normalen Geschwindigkeitsprofil.

JP S53 50270 A zeigt ein Verfahren zur Herstellung eines Formteiles aus Harz mit einem Kornmuster auf der Oberfläche. Die EP 1 458 544 B1 offenbart eine Vorrichtung zur Herstellung von mehrschichtigen Gegenständen durch Co-Extrusion Hierzu umfasst die Extrusionsdüsenvorrichtung einen Schichtungs-Blockabschnitt zum Extrudieren mehrerer Polymerschichten und eine Kammer, in der mehrere Polymerströme zusammenlaufen, bevor sie die Düse verlassen.

Die WO 2012 / 095 211 A1 betrifft ein Spinndüsenpaket zum Erzeugen von Fasern aus einer Polymerschmelze mit einer länglichen Düsenplatte die an einer Oberseite einen Zuführkanal und an einer Unterseite zumindest eine Reihe nebeneinander angeordneter Düsenbohrungen aufweist. An der Oberseite der Düsenplatte ist eine Verteilerplatte angeordnet, die einen dem Zuführkanal zugewandten Verteilerkammer und einen mit der Verteilerkammer verbundenen Schmelzeeinlass aufweist. Zwischen der Verteilerkammer der Verteilerplatte und dem Zuführkanal der Düsenplatte ist eine Lochplatte mit einer Vielzahl von Durchgangsbohrungen vorgesehen, um beim Eintritt der Schmelze in den Zuführkanal eine Umverteilung und Vergleichmäßigung der Schmelze zu erhalten, sind die Durchgangsbohrungen in der Lochplatte in mehrere Bohrungsgruppen aufgeteilt, wobei die Durchgangsbohrungen von zumindest zwei der Bohrungsgruppen innerhalb der Lochplatte gegenüber Mittelsenkrechten derart unterschiedliche Neigungswinkel aufweisen, dass sich die Durchgangsbohrungen zumindest teilweise innerhalb der Lochplatte im Abstand zueinander kreuzen. Somit ist eine Umverteilung der Schmelze in einer Längsrichtung oder einer Querrichtung des Spinndüsenpaketes möglich.

JP H02 223425 A zeigt eine Extrusionsvorrichtung für Gummi. Für eine leichtere Wartung ist ein beweglicher Kopf drehbar gelagert. JP S59 48137 A zeigt einen Zwei-Farb-Extrudierkopf zum Bilden eines Musters mit Änderungen in der Längsrichtung eines extrudierten Stücks durch ein Verfahren, bei dem ein Paar Führungen in Richtung der Breite des extrudierten Stücks am Auslass des musterbildenden Materials in einer Düsenöffnung geschaukelt wird.

Aufgabe der Erfindung ist es, eine Extrusionsvorrichtung zu schaffen, mit der besonders gleichmäßige Strangprofile hergestellt werden können.

Die Aufgabe wird gelöst durch eine Extrusionsvorrichtung aufweisend wenigstens einen Extruder mit einem Schneckenzylinder, einer im Schneckenzylinder drehbar gelagerten Schneckenwelle und einem Extruderaustritt, ein Spritzwerkzeug mit einer die Querschnittskontur des Extrudats bestimmenden Austrittsdüse, sowie einen zwischen dem Extruderaustritt des wenigstens einen Extruders und der Austrittsdüse des Spritzwerkzeugs angeordneten Extrusionskopf, wobei wenigstens eine im Extrusionskopf angeordnete Lochplatte vorgesehen ist, die (z.B. eine Vielzahl von) Durchtrittsöffnungen aufweist, wobei die Durchtrittsöffnungen ausgebildet sind, ein von dem wenigstens einen Extruder durch die Durchtrittsöffnungen der Lochplatte hindurch gefördertes Extrusionsmaterial in wenigstens einem ersten Bereich der Lochplatte und wenigstens einem zweiten Bereich der Lochplatte unterschiedlich aufzustauen, derart, dass das Extrusionsmaterial aus seiner Vorzugsrichtung innerhalb eines Mittenabschnitts der Lochplatte teilweise umgeleitet wird und zwar vermehrt in wenigstens einen Randabschnitt der Lochplatte.

Mittels einer solchen Lochplatte können wenigstens zwei verschiedene Bereiche in der Querschnittsfläche der Lochplatte geschaffen werden, die dem von dem wenigstens einen Extruder durch den Strömungskanal an das Spritzwerkzeug geförderten Extrusionsmaterial jeweils einen unterschiedlichen Strömungswiderstand entgegensetzen. Aufgrund eines durch die verschiedenen Strömungswiderstände geschaffenes unterschiedliches Verhältnis von leichter durchströmbaren Querschnitten und schwerer durchströmbaren Querschnitten, die beispielsweise durch die Querschnittsgröße, die Kanallänge und/oder Gestalt bzw. Konturform von Staukanälen und/oder Durchtrittsöffnungen der Lochplatte bestimmt sein können, kann das Extrusionsmaterial aus einer ohne eine solche Lochplatte sich ergebenden Vorzugsrichtung innerhalb eines Mittenabschnitts des Strömungskanals in die ohne eine solche Lochplatte weniger bevorzugten Randabschnitte des Strömungskanals abgedrängt werden.

Die Lochplatte kann ausgebildet sein, das Extrusionsmaterial in zwei an einem Mittenabschnitt des Strömungkanals gegenüberliegende Randabschnitte des Strömungskanals umzuleiten, in eine Breite des Strömungskanals und/oder in eine Breite der Austrittsdüse des Spritzwerkzeugs, die über einen Extruderdurchmesser des dem Strömungskanal zugeordneten wenigstens einen Extruders hinausgeht.

Durch die Durchtrittsöffnungen der Lochplatte können innerhalb des wenigstens einen ersten Bereichs eine Vielzahl von ersten Staukanälen gebildet werden, die hinsichtlich ihrer Kanallängen und/oder hinsichtlich ihrer Kanalquerschnittsflächen derart aufeinander abgestimmt sind, dass sie einen größeren Strömungswiderstand aufweisen, als zweite Staukanäle des wenigstens einen zweiten Bereichs, und innerhalb des wenigstens einen zweiten Bereichs eine Vielzahl der zweiten Staukanäle durch die Durchtrittsöffnungen gebildet werden, die hinsichtlich ihrer Kanallängen und/oder hinsichtlich ihrer Kanalquerschnittsflächen derart aufeinander abgestimmt sind, dass sie einen kleineren Strömungswiderstand aufweisen, als die ersten Staukanäle des wenigstens einen ersten Bereichs.

Längere Kanallängen ergeben dabei einen größeren Strömungswiderstand, als kürzere Kanallängen. Größere Kanalquerschnittsflächen ergeben dabei einen kleineren Strömungswiderstand, als kleinere Kanalquerschnittsflächen. Ein größerer Strömungswiderstand kann innerhalb eines Bereiches also dadurch erreicht werden, dass die Kanalquerschnittsflächen relativ kleiner sind und/oder die Kanallängen relativ länger sind als in anderen Bereichen. Ein kleinerer Strömungswiderstand kann innerhalb eines Bereiches demgemäß dadurch erreicht werden, dass die Kanalquerschnittsflächen relativ größer sind und/oder die Kanallängen relativ kürzer sind als in anderen Bereichen.

Dermindestens eine erste Bereich kann mehrere erste Durchtrittsöffnungen aufweisen, die bezogen auf die Fläche des ersten Bereichs in Summe eine gemeinsame erste relative Durchtrittsquerschnittsfläche aufweisen und der mindestens eine zweite Bereich kann mehrere zweite relative Durchtrittsöffnungen aufweient, die bezogen auf die Fläche des zweiten Bereichs in Summe eine gemeinsame zweite Durchtrittsquerschnittsfläche aufweisen, die im Vergleich zur ersten relativen Durchtrittsquerschnittsfläche größer ist.

Die Durchtrittsöffnungen sind ausgebildet zum Durchströmen mit einem Material, das von dem wenigstens einen Extruder an das Spritzwerkzeug gefördert wird. Indem mindestens einen ersten Bereich aufweist, der mehrere erste Durchtrittsöffnungen aufweist, die bezogen auf die Fläche des ersten Bereichs in Summe eine gemeinsame erste relative Durchtrittsquerschnittsfläche aufweisen und die Lochplatte mindestens einen zweiten Bereich aufweist, der mehrere zweite relative Durchtrittsöffnungen aufweist, die bezogen auf die Fläche des zweiten Bereichs in Summe eine gemeinsame zweite Durchtrittsquerschnittsfläche aufweisen, die im Vergleich zur ersten relativen Durchtrittsquerschnittsfläche größer ist, können wenigstens zwei verschiedene Bereiche in der Querschnittsfläche der Lochplatte geschaffen werden, die dem von dem wenigstens einen Extruder durch die Lochplatte an das Spritzwerkzeug geförderten Material jeweils einen unterschiedlichen Strömungswiderstand entgegensetzen. Durch ein unterschiedliches Verhältnis von durchströmbaren Querschnitten (Vielzahl von Durchtrittsöffnungen) und nicht-durchströmbaren Querschnitten (Verbindungstege der Lochplatte zwischen den Durchtrittsöffnungen) innerhalb des jeweiligen Bereiches, sowie durch die Größe und/oder Gestalt bzw. Konturform der Durchtrittsöffnungen, können unterschiedliche Strömungswiderstände erzeugt werden.

Die mehreren ersten Durchtrittsöffnungen und die mehreren zweite Durchtrittsöffnungen können mit ihren individuellen Querschnitten alle dieselbe geometrische Form aufweisen, wobei jede der ersten Durchtrittsöffnungen in der Größe der Form kleiner ausgebildet ist, als die Größe der Form jeder zweiten Durchtrittsöffnung.

Die mehreren ersten Durchtrittsöffnungen können vorzugsweise im Querschnitt jeweils kreisförmig sein mit einem ersten Durchmesser und die mehreren zweiten Durchtrittsöffnungen können im Querschnitt jeweils kreisförmig sein mit einem zweiten Durchmesser, wobei die zweiten Durchmesser der zweiten Durchtrittsöffnungen größer sind als die ersten Durchmesser der ersten Durchtrittsöffnungen. So können die Durchtrittsöffnungen mit kreisförmigen Querschnitten auf einfache Weise durch Bohren oder Stanzen hergestellt werden.

Die Querschnittskontur des Extrudats weist eine maximale Breite auf, die größer ist, als die maximale Höhe der Querschnittskontur des Extrudats und die Lochplatte weist in einem Mittenabschnitt der Breite den ersten Bereich auf, der die mehreren ersten Durchtrittsöffnungen aufweist und die Lochplatte weist in den beiden gegenüberliegenden Randabschnitten der Breite, welche den Mittenabschnitt einfassen, jeweils einen zweiten Bereich auf, welche die mehreren zweiten Durchtrittsöffnungen aufweisen.

Wenn die Querschnittskontur des Extrudats eine maximale Breite aufweist, die größer ist, als die maximale Höhe der Querschnittskontur des Extrudats kann dies beispielsweise im Falle von rechteckigen oder zumindest annähernd rechteckigen Profilquerschnitten bedeuten, dass das Extrudat einen Streifen bildet, wie beispielsweise eine Laufbahn als Halbzeug für die Herstellung von Reifen, insbesondere Fahrradreifen oder Automobilreifen. Generell kann die Extrusionsvorrichtung und die Lochplatten zur Herstellung von Gummiprofilen und/oder Elastomerprofilen ausgebildet sein. Generell kann die Extrusionsvorrichtung und die Lochplatten zur Herstellung von mehrschichtigen Gummiprofilen und/oder Elastomerprofilen unterschiedlicher Materialzusammensetzungen ausgebildet sein. Die Profile können generell Kautschukmaterial aufweisen. Indem die Lochplatte in einem Mittenabschnitt der Breite den ersten Bereich aufweist, der die mehreren ersten Durchtrittsöffnungen aufweist und die Lochplatte in den beiden gegenüberliegenden Randabschnitten der Breite, welche den Mittenabschnitt einfassen, jeweils einen zweiten Bereich aufweist, welche die mehreren zweiten Durchtrittsöffnungen aufweisen, wird das zu extrudierende Material aus seiner Vorzugsrichtung innerhalb des Mittenabschnitts umgeleitet werden und zwar vermehrt in die beiden gegenüberliegenden Randabschnitte der Breite. Dies ist besonders dann vorteilhaft, wenn beispielsweise die Extruderaustritte des/der Extruder und/oder die Eintrittsöffnungen des Extrusionskopfes einen kleineren Querschnitt aufweisen, als die Breite der Austrittsdüse des Spritzwerkzeuges bzw. die Breite des zu fertigenden Extrusionsprofils.

Die Querschnittskontur des Extrudats weist eine maximale Breite auf, die größer ist, als die maximale Höhe der Querschnittskontur des Extrudats und die Lochplatte kann dabei in allen Höhenlagen gleichgroße erste Durchtrittsöffnungen und/oder gleichgroße zweite Durchtrittsöffnungen aufweisen. So kann eine gesteuerte Verteilung des zu extrudierenden Materials vorzugsweise über die Breite, insbesondere die größere Breite des Extrusionsprofils erzielt werden, wobei über die Höhe, insbesondere die kleinere Höhe des Extrusionsprofils keine gesteuerte Verteilung erfolgt.

Die Lochplatte weist eine im Wesentlichen rechteckige Grundform auf, wobei eine die Höhe der Lochplatte mitbestimmende Oberkante gerade ausgebildet ist, eine die Höhe der Lochplatte mitbestimmende Unterkante gerade ausgebildet ist, und die beiden seitlichen Kanten, welche die Breite der Lochplatte bestimmende jeweils halbkreisförmig ausgebildet sind. Die jeweilige Lochplatte kann insoweit eine zumindest annähern oder genaue ovale Kontur aufweisen. Dadurch können die Lochplatten auf einfache und schnelle Weise und besonders genau positioniert in den Extrusionskopf, insbesondere in die erste Kopfhälfte und/oder die zweite Kopfhälfte eingesetzt und/oder herausgenommen bzw. ausgetauscht werden.

In allen Ausführungsvarianten kann die wenigstens eine Lochplatte einen Sitz aufweisen, der zur Lagerung eines Siebs ausgebildet ist. Die Lochplatte bildet dann insoweit einen Siebträger für ein Sieb. Das Sieb kann ausgebildet sein, zur Reinigung des von dem wenigstens einen Extruder geförderten Extrusionsmaterials. Der Sitz der Lochplatte kann ausgebildet sein, ein flächiges Sieb auf der Lochplatte derart zu lagern, dass die Lochplatte einen Stützkörper für das Sieb bildet. Der Sitz ermöglicht insbesondere ein einfaches und schnelles Austauschen des Siebes, indem die Lochplatte aus dem Extrusionskopfes entnommen werden kann und das Sieb von der Lochplatte außerhalb des Extrusionskopfes entfernt werden kann und ein neues und/oder anderes Sieb an die Lochplatte eingesetzt werden kann. Anschließend kann die mit dem neuen und/oder anderen Sieb versehene Lochplatte wieder in den Extrusionskopf eingesetzt werden.

Der Extrusionskopf kann eine erste Kopfhälfte aufweisen, welche zwei oder mehr Eintrittsöffnungen aufweist, an die jeweils ein Extruderaustritt eines zugeordneten Extruders von zwei oder mehreren Extrudern angeschlossen ist, und welche erste Kopfhälfte eine der Anzahl der Eintrittsöffnungen entsprechende Anzahl von Durchgangsöffnungen aufweist, wobei jede Durchgangsöffnung einen Sitz für eine Lochplatte aufweist, und der Extrusionskopf kann eine zweite Kopfhälfte aufweisen, welche ein der Anzahl der Durchgangsöffnungen der ersten Kopfhälfte entsprechende Anzahl von Ausgangsöffnungen aufweist, wobei jede Ausgangsöffnung einen Sitz für eine der Lochplatten aufweist, und welche zweite Kopfhälfte wenigstens eine Austrittsöffnung aufweist, an die sich das Spritzwerkzeug anschließt.

Mittels eines solchen geteilten Extrusionskopfes können die Lochplatten getrennt als Einzelkomponenten ausgebildet sein und müssen beispielsweise nicht einteilig in einer ersten Kopfhälfte oder einer zweiten Kopfhälfte des Extrusionskopfes eingearbeitet sein, so dass unterschiedliche Strömungsmuster für verschiedene Spritzwerkzeuge auf einfache und kostengünstige Weise gewechselt werden können, wobei der Extrusionskopf als solches selbst unverändert beibehalten werden kann. Die Lochplatten können insoweit als separate Bauelemente hergestellt und leicht austauschbar in dem Extrusionskopf gelagert sein.

Generell bietet die erfindungsgemäße Extrusionsvorrichtung den Vorteil einer sehr kompakten, stabilen und druckfesten Bauweise. So können Spritzköpfe insbesondere auch unter Verwendung entsprechender Siebeinsätze beispielsweise für die Herstellung von Reifenprofilen geschaffen werden. Bisherige, horizontal geteilte Spritzköpfe, insbesondere Reifenköpfe sind in der Regel nicht druckfest genug, um den Einsatz eines Siebes zu ermöglichen. Ein erfindungsgemäßer Extrusionskopf kann demgemäß insbesondere vertikal geteilt ausgebildet sein.

Die zweite Kopfhälfte kann eine Aufnahme aufweisen, die ausgebildet ist, das Spritzwerkzeug formschlüssig aufzunehmen. So können auch die Spritzwerkzeuge auf einfache und kostengünstige Weise gewechselt werden, wobei der Extrusionskopf als solches selbst unverändert beibehalten werden kann.

Die erste Kopfhälfte und die zweite Kopfhälfte können gegeneinander verstellbar gelagert sein, derart, dass die erste Kopfhälfte und die zweite Kopfhälfte zum Einsetzen der wenigstens einen Lochplatte und/oder zum Entnehmen der wenigstens einen Lochplatte voneinander trennbar beweglich sind. Beispielsweise können die erste Kopfhälfte und die zweite Kopfhälfte mittels einer Scharnieranordnung aufklappbar verbunden sein.

Es zeigen:
- Fig. 1: eine schematische Darstellung einer Extrusionsvorrichtung mit beispielsweise drei Extrudern und drei Lochplatten,
- Fig. 2: eine Schnittdarstellung eines beispielhaften Extrusionskopfes mit einer ersten Kopfhälfte und einer zweiten Kopfhälfte, sowie den drei Lochplatten,
- Fig. 3: eine perspektivische Darstellung der ersten Kopfhälfte gemäß Fig. 2 in einer Draufsicht auf drei Eintrittsöffnungen, an welche die drei Extruder anzuschließen sind,
- Fig. 4: eine schematische Darstellung der ersten Kopfhälfte gemäß Fig. 2 in einer Draufsicht auf die den drei Eintrittsöffnungen abgewandte Rückseite der ersten Kopfhälfte, an der drei korrespondierende Durchgangsöffnungen angeordnet sind, mit Sitzen für die Lochplatten,
- Fig. 5: eine perspektivische Darstellung der zweiten Kopfhälfte gemäß Fig. 2 in einer Draufsicht auf drei korrespondierende Ausgangsöffnungen mit Sitzen für die Lochplatten,
- Fig. 6: eine schematische Darstellung der zweiten Kopfhälfte gemäß Fig. 2 in einer Draufsicht auf die den drei Ausgangsöffnungen abgewandte Rückseite der zweiten Kopfhälfte, an der Austrittsöffnungen angeordnet sind, an die sich das Spritzwerkzeug anschließt, und
- Fig. 7: eine perspektivische schematische Darstellung eines repräsentativen Beispiels einer erfindungsgemäßen Lochplatte.

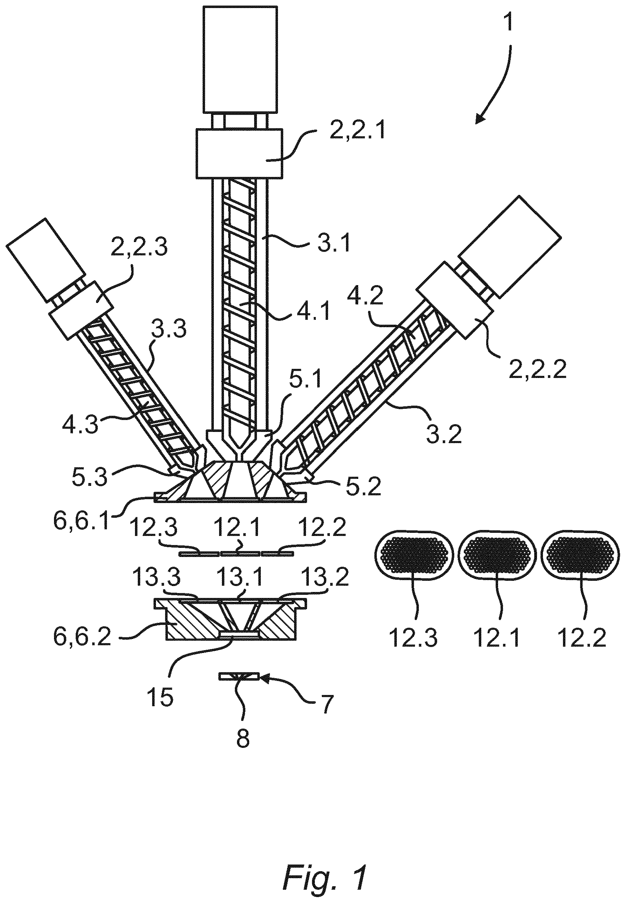

In der in Fig. 1 ist eine beispielhafte Extrusionsvorrichtung 1 gezeigt. Die Extrusionsvorrichtung 1 weist wenigstens einen Extruder 2, im Falle des vorliegenden Ausführungsbeispiels drei Extruder 2.1, 2.2., 2.3 auf, von denen jeder mit einem Schneckenzylinder 3.1, 3.2, 3.3, einer im Schneckenzylinder 3.1, 3.2, 3.3 drehbar gelagerten Schneckenwelle 4.1, 4.2, 4.3 und einem Extruderaustritt 5.1, 5.2, 5.3 versehen ist. Die drei Extruder 2.1, 2.2., 2.3 bzw. deren Extruderaustritte 5.1, 5.2, 5.3 sind eingangsseitig an einen Extrusionskopf 6 angeschlossen. Der Extrusionskopf 6 umfasst eine erste Kopfhälfte 6.1 und eine zweite Kopfhälfte 6.2.

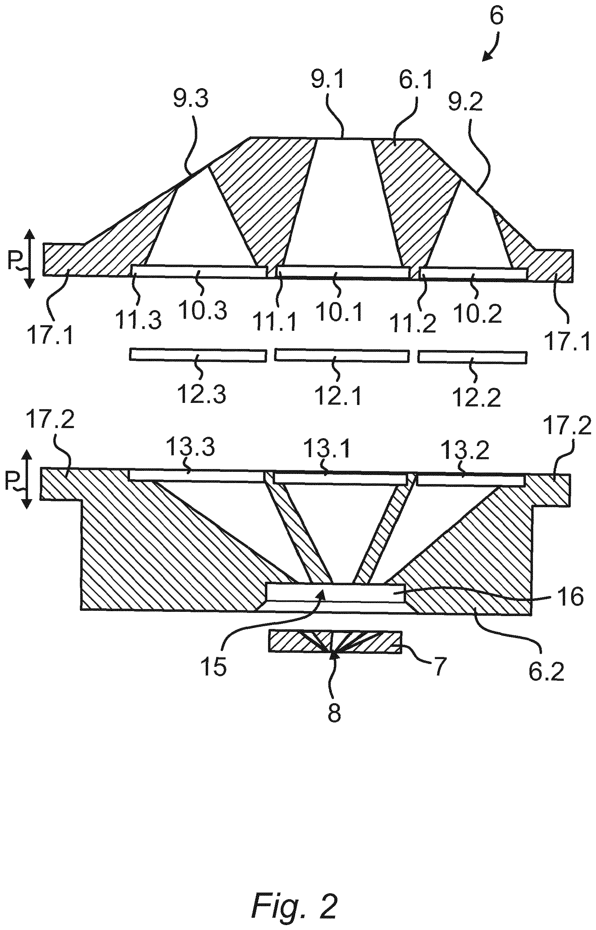

Die Extrusionsvorrichtung 1 umfasst außerdem ein Spritzwerkzeug 7 mit einer die Querschnittskontur des Extrudats bestimmenden Austrittsdüse 8 (Fig. 2). Der Extrusionskopf 6 ist zwischen den Extruderaustritten 5.1, 5.2, 5.3 und der Austrittsdüse 8 des Spritzwerkzeugs 7 angeordnet.

Wie insbesondere in Fig. 1 und Fig. 2 ersichtlich, weist der Extrusionskopf 6 die erste Kopfhälfte 6.1 auf, welche zwei oder mehr, im Falle des vorliegenden Ausführungsbeispiels drei Eintrittsöffnungen 9.1, 9.2, 9.3 aufweist, an die jeweils eine der Extruderaustritte 5.1, 5.2, 5.3 angeschlossen ist. Demgemäß weist die erste Kopfhälfte 6.1 eine der Anzahl der Eintrittsöffnungen 9.1, 9.2, 9.3 entsprechende Anzahl von Durchgangsöffnungen 10.1, 10.2, 10.3 auf. Jede Durchgangsöffnung 10.1, 10.2, 10.3 weist einen Sitz 11.1, 11.2, 11.3 für eine Lochplatte 12.1, 12.2, 12.3 auf.

Der Extrusionskopf 6 weist außerdem die zweite Kopfhälfte 6.2 auf, welche ein der Anzahl der Durchgangsöffnungen 10.1, 10.2, 10.3 der ersten Kopfhälfte 6.1 entsprechende Anzahl von Ausgangsöffnungen 13.1, 13.2, 13.3 aufweist, wobei jede Ausgangsöffnung 13.1, 13.2, 13.3 einen Sitz 14.1, 14.2, 14.3 für eine der Lochplatten 12.1, 12.2, 12.3 aufweist. Die zweite Kopfhälfte 6.2 weist außerdem wenigstens eine Austrittsöffnung 15 auf, an die sich das Spritzwerkzeug 7 anschließt. Demgemäß weist die zweite Kopfhälfte 6.2 eine Aufnahme 16 auf, die ausgebildet ist, das Spritzwerkzeug 7 formschlüssig aufzunehmen.

Die erste Kopfhälfte 6.1 kann einen ersten Klemmflansch 17.1 aufweisen und die zweite Kopfhälfte 6.2 einen zweiten Klemmflansch 17.2 aufweisen, wobei der erste Klemmflansch 17.1 und der zweite Klemmflansch 17.2 ausgebildet sind, mittels einer aufmontierten Klemmschelle (nicht dargestellt) die erste Kopfhälfte 6.1 mit der zweiten Kopfhälfte 6.2 druckfest zusammenzuhalten, wenn wenigstens eine Lochplatte 12.1, 12.2, 12.3 zwischen der ersten Kopfhälfte 6.1 und der zweiten Kopfhälfte 6.2 eingefügt ist.

Die erste Kopfhälfte 6.1 und die zweite Kopfhälfte 6.2 können, wie durch die Pfeile P angedeutet, gegeneinander verstellbar gelagert sein, derart, dass die erste Kopfhälfte 6.1 und die zweite Kopfhälfte 6.2 zum Einsetzen der wenigstens einen Lochplatte 12.1, 12.2, 12.3und/oder zum Entnehmen der wenigstens einen Lochplatte 12.1, 12.2, 12.3voneinander trennbar beweglich sind.

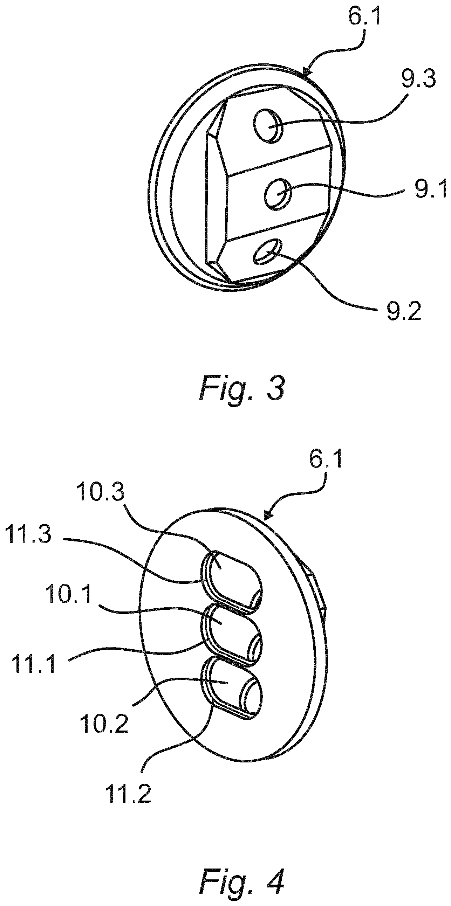

Die erste Kopfhälfte 6.1 ist in Fig. 3 in einer Draufsicht auf die drei Eintrittsöffnungen 9.1, 9.2, 9.3, an welche die drei Extruder 2.1, 2.2, 2.3 anzuschließen sind, dargestellt.

Die erste Kopfhälfte 6.1 ist in Fig. 4 in einer Draufsicht auf die den drei Eintrittsöffnungen 9.1, 9.2, 9.3 abgewandte Rückseite der ersten Kopfhälfte 6.1, an der die drei korrespondierende Durchgangsöffnungen 10.1, 10.2, 10.3 angeordnet sind, dargestellt, mit den Sitzen 11.1, 11.2, 11.3 für die Lochplatten 12.1, 12.2, 12.3.

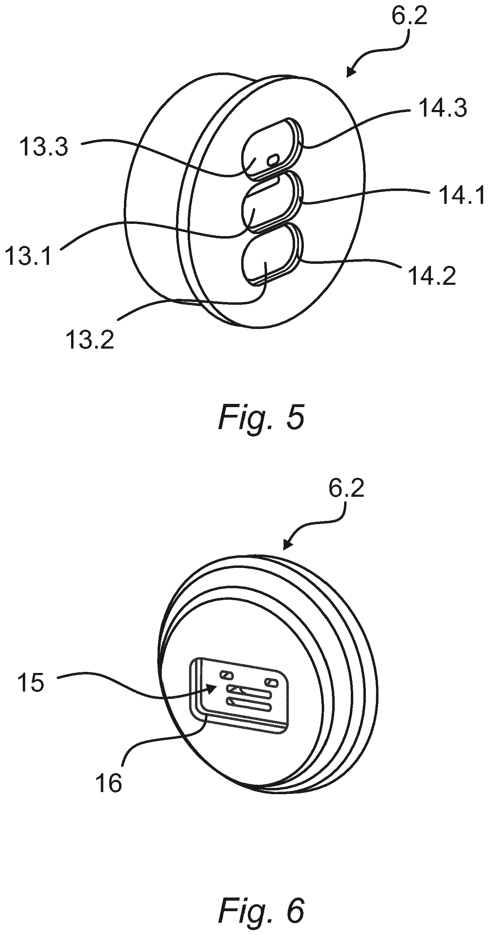

Die zweite Kopfhälfte 6.2 ist in Fig. 5 in einer Draufsicht auf die drei korrespondierenden Ausgangsöffnungen 13.1, 13.2, 13.3 mit den Sitzen 14.1, 14.2, 14.3 für die Lochplatten 12.1, 12.2, 12.3 dargestellt.

Die zweite Kopfhälfte 6.2 ist in Fig. 6 in einer Draufsicht auf die den drei Ausgangsöffnungen 13.1, 13.2, 13.3 abgewandte Rückseite der zweiten Kopfhälfte 6.2, an der Austrittsöffnungen 15 angeordnet sind, an die sich das Spritzwerkzeug 7 anschließt, dargestellt.

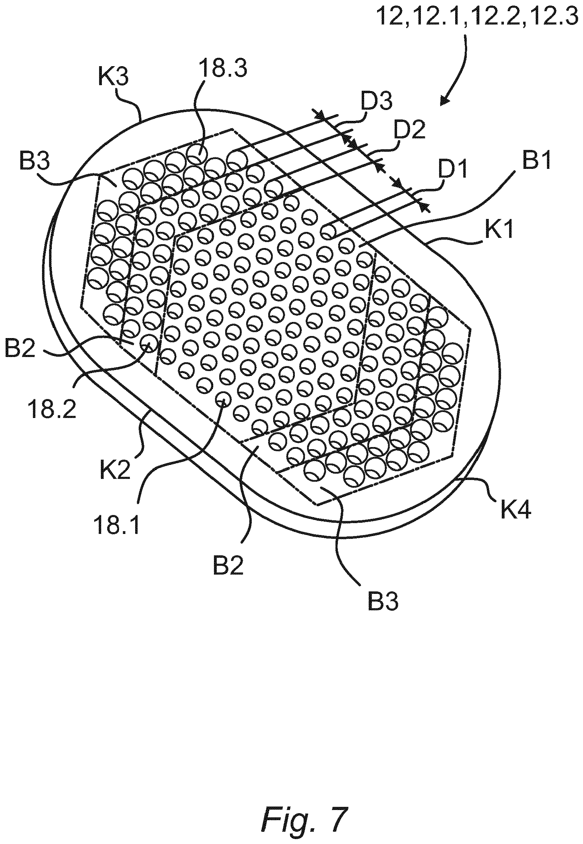

In Fig. 7 ist eine repräsentative Lochplatte 12.1, 12.2, 12.3 in Alleinstellung gezeigt. Die Lochplatte 12.1, 12.2, 12.3 umfasst eine Vielzahl von Durchtrittsöffnungen 18.

Im Falle des vorliegenden Ausführungsbeispiels weist die Lochplatte 12.1, 12.2, 12.3 einen ersten Bereich B1 auf, der mehrere erste Durchtrittsöffnungen 18.1 aufweist, die bezogen auf die Fläche des ersten Bereichs B1 in Summe eine gemeinsame erste relative Durchtrittsquerschnittsfläche aufweisen. Die Lochplatte 12.1, 12.2, 12.3 weist außerdem einen zweiten Bereich B2 auf, der mehrere zweite Durchtrittsöffnungen 18.2 umfasst, die bezogen auf die Fläche des zweiten Bereichs B2 in Summe eine gemeinsame zweite relative Durchtrittsquerschnittsfläche aufweisen, die im Vergleich zur ersten relativen Durchtrittsquerschnittsfläche größer ist. Des Weiteren weist die Lochplatte 12.1, 12.2, 12.3 im Falle des vorliegenden Ausführungsbeispiels einen dritten Bereich B3 auf, der mehrere dritte Durchtrittsöffnungen 18.3 umfasst, die bezogen auf die Fläche des zweiten Bereichs B2 und des ersten Bereichs B1 in Summe eine gemeinsame dritte relative Durchtrittsquerschnittsfläche aufweisen, die im Vergleich zur ersten relativen Durchtrittsquerschnittsfläche und zur zweiten relativen Durchtrittsquerschnittsfläche größer ist.

Die mehreren ersten Durchtrittsöffnungen 18.1 sind im Querschnitt jeweils kreisförmig mit einem ersten Durchmesser D1, die mehreren zweiten Durchtrittsöffnungen 18.2 sind im Querschnitt jeweils kreisförmig mit einem zweiten Durchmesser D2 und die mehreren dritten Durchtrittsöffnungen 18.3 sind im Querschnitt jeweils kreisförmig mit einem dritten Durchmesser D3 ausgebildet, wobei die zweiten Durchmesser D2 der zweiten Durchtrittsöffnungen 18.2 größer sind als die ersten Durchmesser D1 der ersten Durchtrittsöffnungen 18.1 und wobei die dritten Durchmesser D3 der dritten Durchtrittsöffnungen 18.3 größer sind als die zweiten Durchmesser D2 der zweiten Durchtrittsöffnungen 18.2.

Insbesondere wenn die Querschnittskontur des Extrudats eine maximale Breite aufweist, die größer ist, als die maximale Höhe der Querschnittskontur des Extrudats kann die Lochplatte 12.1, 12.2, 12.3, wie in Fig. 7 dargestellt, in einem Mittenabschnitt der Breite den ersten Bereich B1 aufweisen, der die mehreren ersten Durchtrittsöffnungen 18.1 aufweist und die Lochplatte 12.1, 12.2, 12.3 in den beiden gegenüberliegenden Randabschnitten der Breite, welche den Mittenabschnitt einfassen, jeweils einen zweiten Bereich B2 aufweisen, welche die mehreren zweiten Durchtrittsöffnungen 18.2 aufweisen und zusätzlich an den Randbereichen des Bereichs B2 die weiteren dritten Durchtrittsöffnungen 18.3 aufweisen. Dabei kann die Lochplatte12.1, 12.2, 12.3, wie in Fig. 7 dargestellt, in allen Höhenlagen jeweils gleichgroße erste Durchtrittsöffnungen 18.1 und gleichgroße zweite Durchtrittsöffnungen 18.2, sowie gleichgroße dritte Durchtrittsöffnungen 18.3 aufweisen.

Die Lochplatte 12.1, 12.2, 12.3 weist im Falle des vorliegenden Ausführungsbeispiels eine im Wesentlichen rechteckige Grundform auf, wobei eine die Höhe der Lochplatte 12.1, 12.2, 12.3 mitbestimmende Oberkante K1 gerade ausgebildet ist, eine die Höhe der Lochplatte 12.1, 12.2, 12.3 mitbestimmende Unterkante K2 gerade ausgebildet ist, und die beiden seitlichen Kanten K3, K4, welche die Breite der Lochplatte 12.1, 12.2, 12.3 bestimmen, jeweils halbkreisförmig ausgebildet sind.

### Bezugszeichenliste

- 1: Extrusionsvorrichtung
- 2, 2.1, 2.2, 2.3: Extruder
- 3.1, 3.2, 3.3: Schneckenzylinder
- 4.1, 4.2, 4.3: Schneckenwelle
- 5.1, 5.2, 5.3: Extruderaustritt
- 6: Extrusionskopf
- 6.1: erste Kopfhälfte
- 6.2: zweite Kopfhälfte
- 7: Spritzwerkzeug
- 8: Austrittsdüse
- 9.1, 9.2, 9.3: Eintrittsöffnungen
- 10.1, 10.2, 10.3: Durchgangsöffnungen
- 11.1, 11.2, 11.3: Sitz
- 12.1, 12.2, 12.3: Lochplatte
- 13.1, 13.2, 13.3: Ausgangsöffnungen
- 14.1, 14.2, 14.3: Sitz
- 15: Austrittsöffnung
- 16: Aufnahme
- 17.1: erster Klemmflansch
- 17.2: zweiter Klemmflansch
- 18: Durchtrittsöffnungen
- B1: erster Bereich
- B2: zweiter Bereich
- B3: dritter Bereich
- 18.1: erste Durchtrittsöffnungen
- 18.2: zweite Durchtrittsöffnungen
- 18.3: dritte Durchtrittsöffnungen
- D1: erste Durchmesser
- D2: zweite Durchmesser
- D3: dritte Durchmesser
- K1: Oberkante
- K2: Unterkante
- K3, K4: seitliche Kanten

## Patentansprüche

1. Extrusionsvorrichtung aufweisend wenigstens einen Extruder (2, 2.1, 2.2, 2.3) mit einem Schneckenzylinder (3.1, 3.2, 3.3), einer im Schneckenzylinder (3.1, 3.2, 3.3) drehbar gelagerten Schneckenwelle (4.1, 4.2, 4.3) und einem Extruderaustritt (5.1, 5.2, 5.3), ein Spritzwerkzeug (7) mit einer die Querschnittskontur des Extrudats bestimmenden Austrittsdüse (8), sowie einen zwischen dem Extruderaustritt (5.1, 5.2, 5.3) des wenigstens einen Extruders (2, 2.1, 2.2, 2.3) und der Austrittsdüse (8) des Spritzwerkzeugs (7) angeordneten Extrusionskopf (6), **mit** wenigstens einer im Extrusionskopf (6) angeordneten Lochplatte (12.1, 12.2, 12.3), die Durchtrittsöffnungen (18) aufweist, wobei die Durchtrittsöffnungen (18) ausgebildet sind, ein von dem wenigstens einen Extruder (2, 2.1, 2.2, 2.3) durch die Durchtrittsöffnungen (18) der Lochplatte (12.1, 12.2, 12.3) hindurch gefördertes Extrusionsmaterial in wenigstens einem ersten Bereich (B1) der Lochplatte (12.1, 12.2, 12.3) und wenigstens einem zweiten Bereich (B2) der Lochplatte (12.1, 12.2, 12.3) unterschiedlich aufzustauen, derart, dass das Extrusionsmaterial aus seiner Vorzugsrichtung innerhalb eines Mittenabschnitts der Lochplatte (12.1, 12.2, 12.3) teilweise umgeleitet wird und zwar vermehrt in wenigstens einen Randabschnitt der Lochplatte (12.1, 12.2, 12.3), **dadurch gekennzeichnet, dass** die Lochplatte (12.1, 12.2, 12.3) eine im Wesentlichen rechteckige Grundform aufweist, wobei eine die Höhe der Lochplatte (12.1, 12.2, 12.3) mitbestimmende Oberkante (K1) gerade ausgebildet ist, eine die Höhe der Lochplatte (12.1, 12.2, 12.3) mitbestimmende Unterkante (K2) gerade ausgebildet ist, und die beiden seitlichen Kanten (K3, K4), welche die Breite der Lochplatte (12.1, 12.2, 12.3) bestimmen, jeweils halbkreisförmig ausgebildet sind, wobei die Querschnittskontur des Extrudats eine maximale Breite aufweist, die größer ist, als die maximale Höhe der Querschnittskontur des Extrudats und die Lochplatte (12.1, 12.2, 12.3) in einem Mittenabschnitt der Breite den ersten Bereich (B1) aufweist, der die mehreren ersten Durchtrittsöffnungen (18.1) aufweist und die Lochplatte (12.1, 12.2, 12.3) in den beiden gegenüberliegenden Randabschnitten der Breite, welche den Mittenabschnitt einfassen, jeweils einen zweiten Bereich (B2) aufweist, welche die mehreren zweiten Durchtrittsöffnungen (18.2) aufweisen.

2. Extrusionsvorrichtung nach Anspruch 1,
**dadurch gekennzeichnet, dass** die Lochplatte (12.1, 12.2, 12.3) ausgebildet ist, das Extrusionsmaterial in zwei an einem Mittenabschnitt des Strömungskanals gegenüberliegende Randabschnitte des Strömungskanals umzuleiten, in eine Breite des Strömungskanals und/oder in eine Breite der Austrittsdüse (8) des Spritzwerkzeugs (7), die über einen Extruderdurchmesser des dem Strömungskanal zugeordneten wenigstens einen Extruders (2, 2.1, 2.2, 2.3) hinausgeht.

3. Extrusionsvorrichtung nach Anspruch 1 oder 2,
**dadurch gekennzeichnet, dass** durch die Durchtrittsöffnungen (18) der Lochplatte (12.1, 12.2, 12.3) innerhalb des wenigstens einen ersten Bereichs (B1) eine Vielzahl von ersten Staukanälen gebildet werden, die hinsichtlich ihrer Kanallängen und/oder hinsichtlich ihrer Kanalquerschnittsflächen derart aufeinander abgestimmt sind, dass sie einen größeren Strömungswiderstand aufweisen, als zweite Staukanäle des wenigstens einen zweiten Bereichs (B2), und innerhalb des wenigstens einen zweiten Bereichs (B2) eine Vielzahl der zweiten Staukanäle durch die Durchtrittsöffnungen (18) gebildet werden, die hinsichtlich ihrer Kanallängen und/oder hinsichtlich ihrer Kanalquerschnittsflächen derart aufeinander abgestimmt sind, dass sie einen kleineren Strömungswiderstand aufweisen, als die ersten Staukanäle des wenigstens einen ersten Bereichs (B1).

4. Extrusionsvorrichtung nach einem der Ansprüche 1 bis 3,
**dadurch gekennzeichnet, dass** der mindestens eine erste Bereich (B1) mehrere erste Durchtrittsöffnungen (18.1) aufweist, die bezogen auf die Fläche des ersten Bereichs (B1) in Summe eine gemeinsame erste relative Durchtrittsquerschnittsfläche aufweisen und der mindestens eine zweite Bereich (B2; B3) mehrere zweite Durchtrittsöffnungen (18.2, 18.3) aufweist, die bezogen auf die Fläche des zweiten Bereichs (B2, B3) in Summe eine gemeinsame zweite relative Durchtrittsquerschnittsfläche aufweisen, die im Vergleich zur ersten relativen Durchtrittsquerschnittsfläche größer ist.

5. Extrusionsvorrichtung nach Anspruch 4,
**dadurch gekennzeichnet, dass** die mehreren ersten Durchtrittsöffnungen (18.1) und die mehreren zweite Durchtrittsöffnungen (18.2) mit ihren individuellen Querschnitten alle dieselbe geometrische Form aufweisen, wobei jede der ersten Durchtrittsöffnungen (18.1) in der Größe der Form kleiner ausgebildet ist, als die Größe der Form jeder zweiten Durchtrittsöffnung (18.2).

6. Extrusionsvorrichtung nach Anspruch 4 oder 5,
**dadurch gekennzeichnet, dass** die mehreren ersten Durchtrittsöffnungen (18.1) im Querschnitt jeweils kreisförmig sind mit einem ersten Durchmesser (D1) und die mehreren zweiten Durchtrittsöffnungen (18.2) im Querschnitt jeweils kreisförmig sind mit einem zweiten Durchmesser (D2), wobei die zweiten Durchmesser (D2) der zweiten Durchtrittsöffnungen (18.2) größer sind als die ersten Durchmesser (D1) der ersten Durchtrittsöffnungen (18.1).

7. Extrusionsvorrichtung nach einem der Ansprüche 1 bis 6,
**dadurch gekennzeichnet, dass** die Querschnittskontur des Extrudats eine maximale Breite aufweist, die größer ist, als die maximale Höhe der Querschnittskontur des Extrudats und die Lochplatte (12.1, 12.2, 12.3) in allen Höhenlagen gleichgroße erste Durchtrittsöffnungen (18.1) und/oder gleichgroße zweite Durchtrittsöffnungen (18.2) aufweist.

8. Extrusionsvorrichtung nach einem der Ansprüche 1 bis 7,
**dadurch gekennzeichnet, dass** die mehreren ersten Durchtrittsöffnungen (18.1) und die mehreren zweiten Durchtrittsöffnungen (18.2) sich im Wesentlichen gleichmäßig über die Lochplatte (12.1, 12.2, 12.3) verteilen.

9. Extrusionsvorrichtung nach einem der Ansprüche 1 bis 8,
**dadurch gekennzeichnet, dass** die wenigstens eine Lochplatte (12.1, 12.2, 12.3) einen Sitz aufweist, der zur Lagerung eines Siebs ausgebildet ist.

10. Extrusionsvorrichtung nach einem der Ansprüche 1 bis 9,
**dadurch gekennzeichnet, dass** der Extrusionskopf (6) eine erste Kopfhälfte (6.1) aufweist, welche zwei oder mehr Eintrittsöffnungen (9.1, 9.2, 9.3) aufweist, an die jeweils ein Extruderaustritt (5.1, 5.2, 5.3) eines zugeordneten Extruders (2, 2.1, 2.2, 2.3) von zwei oder mehreren Extrudern (2, 2.1, 2.2, 2.3) angeschlossen ist, und welche erste Kopfhälfte (6.1) eine der Anzahl der Eintrittsöffnungen (9.1, 9.2, 9.3) entsprechende Anzahl von Durchgangsöffnungen (10.1, 10.2, 10.3) aufweist, wobei jede Durchgangsöffnung (10.1, 10.2, 10.3) einen Sitz (11.1, 11.2, 11.3) für eine Lochplatte (12.1, 12.2, 12.3) aufweist, und dass der Extrusionskopf (6) eine zweite Kopfhälfte(6.2) aufweist, welche ein der Anzahl der Durchgangsöffnungen (10.1, 10.2, 10.3) der ersten Kopfhälfte (6.1) entsprechende Anzahl von Ausgangsöffnungen (13.1, 13.2, 13.3) aufweist, wobei jede Ausgangsöffnung (13.1, 13.2, 13.3) einen Sitz (14.1, 14.2, 14.3) für eine der Lochplatten (12.1, 12.2, 12.3) aufweist, und welche zweite Kopfhälfte (6.2) wenigstens eine Austrittsöffnung (15) aufweist, an die sich das Spritzwerkzeug (7) anschließt.

11. Extrusionsvorrichtung nach Anspruch 10,
**dadurch gekennzeichnet, dass** die erste Kopfhälfte (6.1) einen ersten Klemmflansch (17.1) aufweist und die zweite Kopfhälfte (6.2) einen zweiten Klemmflansch (17.2) aufweist, wobei der erste Klemmflansch (17.1) und der zweite Klemmflansch (17.2) ausgebildet sind, mittels einer aufmontierten Klemmschelle die erste Kopfhälfte (6.1) mit der zweiten Kopfhälfte (6.2) druckfest zusammenzuhalten, wenn wenigstens eine Lochplatte (12.1, 12.2, 12.3) zwischen der ersten Kopfhälfte (6.1) und der zweiten Kopfhälfte (6.2) eingefügt ist.

12. Extrusionsvorrichtung nach Anspruch 10 oder 11,
**dadurch gekennzeichnet, dass** die erste Kopfhälfte (6.1) und die zweite Kopfhälfte (6.2) gegeneinander verstellbar gelagert sind, derart, dass die erste Kopfhälfte (6.1) und die zweite Kopfhälfte (6.2) zum Einsetzen der wenigstens einen Lochplatte (12.1, 12.2, 12.3) und/oder zum Entnehmen der wenigstens einen Lochplatte (12.1, 12.2, 12.3) voneinander trennbar beweglich sind.

## Claims

1. An extrusion device comprising at least one extruder (2, 2.1, 2.2, 2.3) having a screw cylinder (3.1, 3.2, 3.3), a screw shaft (4.1, 4.2, 4.3) rotatably supported in the screw cylinder (3.1, 3.2, 3.3) and an extruder outlet (5.1, 5.2, 5.3), an injection mould (7) having an outlet nozzle (8) determining the cross-sectional contour of the extrudate, and an extrusion head (6) arranged between the extruder outlet (5.1, 5.2, 5.3) of the at least one extruder (2, 2.1, 2.2, 2.3) and the outlet nozzle (8) of the injection mould (7), with at least one perforated plate (12.1, 12.2, 12.3) arranged in the extrusion head (6), which has passage openings (18), wherein the passage openings (18) are designed to dam up an extrusion material conveyed from the at least one extruder (2, 2.1, 2.2, 2.3) through the passage openings (18) of the perforated plate (12.1, 12.2, 12.3) differently in at least one first region (B1) of the perforated plate (12.1, 12.2, 12.3) and at least one second region (B2) of the perforated plate (12.1, 12.2, 12.3) in such a way that the extrusion material is partly diverted from its preferential direction within a central section of the perforated plate (12.1, 12.2, 12.3) specifically increasingly into at least one edge section of the perforated plate (12.1, 12.2, 12.3),
**characterized in that** the perforated plate (12.1, 12.2, 12.3) has a substantially rectangular basic shape, wherein an upper edge (K1) co-determining the height of the perforated plate (12.1, 12.2, 12.3) is configured to be straight, a lower edge (K2) co-determining the height of the perforated plate (12.1, 12.2, 12.3) is configured to be straight, and the two lateral edges (K3, K4), which determine the width of the perforated plate (12.1, 12.2, 12.3) are configured respectively to be semi-circular, wherein the cross-sectional contour of the extrudate has a maximum width which is greater than the maximum height of the cross-sectional contour of the extrudate, and the perforated plate (12.1, 12.2, 12.3) in a central section of the width has the first region (B1), which has the several first passage openings (18.1), and the perforated plate (12.1, 12.2, 12.3) in the two opposite edge sections of the width, which border the central section, has respectively a second region (B2), which have the several second passage openings (18.2).

2. The extrusion device according to Claim 1,
**characterized in that** the perforated plate (12.1, 12.2, 12.3) is designed to divert the extrusion material into two opposite edge sections at a central section of the flow channel, into a width of the flow channel and/or into a width of the outlet nozzle (8) of the injection mould (7), which exceeds an extruder diameter of the at least one extruder (2, 2.1, 2.2, 2.3) associated with the flow channel.

3. The extrusion device according to Claim 1 or 2,
**characterized in that** through the passage openings (18) of the perforated plate (12.1, 12.2, 12.3) within the at least one first region (B1) a plurality of first dam channels are formed, which with regard to their channel lengths and/or with regard to their channel cross-sectional areas are coordinated with one another in such a way that they have a greater flow resistance than second dam channels of the at least one second region (B2), and within the at least one second region (B2) a plurality of the second dam channels are formed through the passage openings (18), which with regard to their channel lengths and/or with regard to their channel cross-sectional areas are coordinated with one another in such a way that they have a smaller flow resistance than the first dam channels of the at least one first region (B1) .

4. The extrusion device according to one of Claims 1 to 3,
**characterized in that** the at least one first region (B1) has several first passage openings (18.1), which in relation to the area of the first region (B1) in total have a shared first relative passage cross-sectional area and the at least one second region (B2; B3) has several second passage openings (18.2, 18.3), which in relation to the area of the second region (B2, B3) in total have a shared second relative passage cross-sectional area, which is greater compared to the first relative passage cross-sectional area.

5. The extrusion device according to Claim 4,
**characterized in that** the several first passage openings (18.1) and the several second passage openings (18.2) with their individual cross-sections all have the same geometric shape, wherein each of the first passage openings (18.1) is configured smaller in the size of the shape than the size of the shape of each second passage opening (18.2).

6. The extrusion device according to Claim 4 or 5,
**characterized in that** the several first passage openings (18.1) are respectively circular in cross-section with a first diameter (D1) and the several second passage openings (18.2) are respectively circular in cross-section with a second diameter (D2), wherein the second diameters (D2) of the second passage openings (18.2) are greater than the first diameters (D1) of the first passage openings (18.1).

7. The extrusion device according to one of Claims 1 to 6,
**characterized in that** the cross-sectional contour of the extrudate has a maximum width which is greater than the maximum height of the cross-sectional contour of the extrudate and the perforated plate (12.1, 12.2, 12.3) in all vertical positions has first passage openings (18.1) of equal size and/or second passage openings (18.2) of equal size.

8. The extrusion device according to one of Claims 1 to 7,
**characterized in that** the several first passage openings (18.1) and the several second passage openings (18.2) are distributed substantially uniformly over the perforated plate (12.1, 12.2, 12.3) .

9. The extrusion device according to one of Claims 1 to 8,
**characterized in that** the at least one perforated plate (12.1, 12.2, 12.3) has a seat which is designed for supporting a screen.

10. The extrusion device according to one of Claims 1 to 9,
**characterized in that** the extrusion head (6) has a first head half (6.1), which has two or more inlet openings (9.1, 9.2, 9.3) to which respectively an extruder outlet (5.1, 5.2, 5.3) of an associated extruder (2, 2.1, 2.2, 2.3) of two or more extruders (2, 2.1, 2.2, 2.3) is connected, and which first head half (6.1) has a number of through-openings (10.1, 10.2, 10.3) corresponding to the number of inlet openings (9.1, 9.2, 9.3), wherein each through-opening (10.1, 10.2, 10.3) has a seat (11.1, 11.2, 11.3) for a perforated plate (12.1, 12.2, 12.3), and that the extrusion head (6) has a second head half (6.2) which has a number of exit openings (13.1, 13.2, 13.3) corresponding to the number of through-openings (10.1, 10.2, 10.3) of the first head half (6.1), wherein each exit opening (13.1, 13.2, 13.3) has a seat (14.1, 14.2, 14.3) for one of the perforated plates (12.1, 12.2, 12.3), and which second head half (6.2) has at least one outlet opening (15) to which the injection mould (7) adjoins.

11. The extrusion device according to Claim 10,
**characterized in that** the first head half (6.1) has a first clamping flange (17.1) and the second head half (6.2) has second clamping flange (17.2), wherein the first clamping flange (17.1) and the second clamping flange (17.2) are designed to hold the first head half (6.1) with the second head half (6.2) together in a pressure-resistant manner by means of a mounted clamping clip, when at least one perforated plate (12.1, 12.2, 12.3) is inserted between the first head half (6.1) and the second head half (6.2).

12. The extrusion device according to Claim 10 or 11,
**characterized in that** the first head half (6.1) and the second head half (6.2) are mounted adjustably with respect to one another, in such a way that the first head half (6.1) and the second head half (6.2) are movable separately from one another for inserting the at least one perforated plate (12.1, 12.2, 12.3) and/or for removing the at least one perforated plate (12.1, 12.2, 12.3).

## Revendications

1. Dispositif d'extrusion présentant au moins une extrudeuse (2, 2.1, 2.2, 2.3) comprenant un cylindre de vis sans fin (3.1, 3.2, 3.3), un arbre de vis sans fin (4.1, 4.2, 4.3) disposé rotatif dans le cylindre de vis sans fin (3.1, 3.2, 3.) et une sortie d'extrudeuse (5.1, 5.2, 5.3), un outil d'injection (7) comprenant une filière de sortie (8) déterminant le contour transversal du produit extrudé, ainsi qu'une tête d'extrusion (6) disposée entre la sortie d'extrudeuse (5.1, 5.2, 5.3) de l'au moins une extrudeuse (2, 2.1, 2.2, 2.3) et la filière de sortie (8) de l'outil d'injection (7), comprenant au moins une plaque perforée (12.1, 12.2, 12.3) disposée dans la tête d'extrusion (6) qui présente des ouvertures de passage (18), dans lequel les ouvertures de passage (18) sont conçues pour retenir un matériau d'extrusion acheminé par l'au moins une extrudeuse (2, 2.1, 2.2, 2.3) à travers les ouvertures de passage (18) de la plaque perforée (12.1, 12.2, 12.3) dans au moins une première zone (B1) de la plaque perforée (12.1, 12.2, 12.3) et au moins une seconde zone (B2) de la plaque perforée (12.1, 12.2, 12.3) de manière différente, de sorte que le matériau d'extrusion soit dérivé en partie de son dispositif d'avancement à l'intérieur d'un tronçon central de la plaque perforée (12.1, 12.2, 12.3) et ce plusieurs fois dans au moins un tronçon de bord de la plaque perforée (12.1, 12.2, 12.3),
**caractérisé en ce que** la plaque perforée (12.1, 12.2, 12.3) présente une forme de base essentiellement rectangulaire, dans lequel une arête supérieure (K1) co-déterminant la hauteur de la plaque perforée (12.1, 12.2, 12.3) est droite, une arête inférieure (K2) co-déterminant la hauteur de la plaque perforée (12.1, 12.2, 12.3) est droite, et les deux arêtes latérales (K3, K4) qui déterminent la largeur de la plaque perforée (12.1, 12.2, 12.3) sont respectivement formées en demi-cercle, dans lequel le contour transversal du produit extrudé présente une largeur maximale qui est supérieure à la hauteur maximale du contour transversal du produit extrudé et la plaque perforée (12.1, 12.2, 12.3) présente dans un tronçon central la première zone (B1) qui présente la pluralité de premières ouvertures (18.1) et la plaque perforée (12.1, 12.2, 12.3) présente, dans les deux tronçons de bord opposés de la largeur qui englobent le tronçon central, respectivement une seconde zone (B2), laquelle présente la pluralité de secondes ouvertures de passage (18.2).

2. Dispositif d'extrusion selon la revendication 1,
**caractérisé en ce que** la plaque perforée (12.1, 12.2, 12.3) est conçue pour dériver le matériau d'extrusion dans deux tronçons du bord du canal d'écoulement opposés sur un tronçon central du canal d'écoulement, dans une largeur du canal d'écoulement et/ou dans une largeur de la filière de sortie (8) de l'outil d'injection (7) qui, fait saillie au-delà d'un diamètre d'extrudeuse de l'au moins une extrudeuse (2, 2.1, 2.2, 2.3) attribuée au canal d'écoulement.

3. Dispositif d'extrusion selon la revendication 1 ou 2,
**caractérisé en ce qu'**une pluralité de canaux de retenue est formée à travers les ouvertures de passage (18) de la plaque perforée (12.1, 12.2, 12.3) à l'intérieur de l'au moins une première zone (B1), qui sont déterminés entre eux en regard de leurs longueurs de canal et/ou de leurs aires de section transversale de canal de telle sorte qu'ils présentent une plus grande résistance à l'écoulement que des seconds canaux de retenue de l'au moins une seconde zone (B2), et à l'intérieur de l'au moins une seconde zone (B2) sont formés une pluralité des seconds canaux de retenue à travers les ouvertures de passage (18) qui sont déterminés entre eux en regard de leurs longueurs de canal et/ou de leurs aires de section transversale de canal de telle sorte qu'ils présentent une moindre résistance à l'écoulement que les premiers canaux de retenue de l'au moins une première zone (B1).

4. Dispositif d'extrusion selon l'une des revendications 1 à 3,
**caractérisé en ce que** l'au moins une première zone (B1) présente plusieurs premières ouvertures de passage (18.1) qui, rapporté à l'aire de la première zone (B1), présentent en somme une première aire de section transversale de passage relative commune et l'au moins une seconde zone (B2 ; B3) présente plusieurs secondes ouvertures de passage (18.2, 18.3) qui, rapporté à l'aire de la seconde zone (B2, B3), présentent en somme une seconde aire de section transversale de passage relative commune qui est plus grande en comparaison que la première aire de section transversale de passage relative.

5. Dispositif d'extrusion selon la revendication 4, **caractérisé en ce que** la pluralité de premières ouvertures de passage (18.1) et la pluralité de secondes ouvertures de passage (18.2) présentent toutes la même forme géométrique avec leurs sections individuelles, dans lequel chacune des premières ouvertures de passage (18.1) a une forme plus petite que la forme de chaque seconde ouverture de passage (18.2).

6. Dispositif d'extrusion selon la revendication 4 ou 5,
**caractérisé en ce que** la pluralité de premières ouvertures de passage (18.1) ont une section circulaire avec un premier diamètre (D1) et la pluralité de secondes ouvertures de passage (18.2) ont une section circulaire avec un second diamètre (D2), dans lequel les seconds diamètres (D2) des secondes ouvertures de passage (18.2) sont plus grands que les premiers diamètres (D1) des premières ouvertures de passage (18.1).

7. Dispositif d'extrusion selon l'une des revendications 1 à 6,
**caractérisé en ce que** le contour transversal du produit extrudé présente une largeur maximale qui est plus grande que la hauteur maximale du contour transversal du produit extrudé et la plaque perforée (12.1, 12.2, 12.3) présente à tous les niveaux des premières ouvertures de passage (18.1) de même grandeur et/ou des secondes ouvertures de passage (18.2) de même grandeur.

8. Dispositif d'extrusion selon l'une des revendications 1 à 7,
**caractérisé en ce que** la pluralité de premières ouvertures de passage (18.1) et la pluralité de secondes ouvertures de passage (18.2) se répartissent essentiellement uniformément sur la plaque perforée (12.1, 12.2, 12.3).

9. Dispositif d'extrusion selon l'une des revendications 1 à 8,
**caractérisé en ce que** l'au moins une plaque perforée (12.1, 12.2, 12.3) présente un siège qui est conçu pour l'appui d'un tamis.

10. Dispositif d'extrusion selon l'une des revendications 1 à 9,
**caractérisé en ce que** la tête d'extrusion (6) présente une première moitié de tête (6.1) qui présente deux ouvertures d'entrée (9.1, 9.2, 9.3) ou plus auxquelles se raccorde respectivement une sortie d'extrudeuse (5.1, 5.2, 5.3) d'une extrudeuse (2, 2.1, 2.2, 2.3) correspondante de deux extrudeuses (2, 2.1, 2.2, 2.3) ou plus, et laquelle première moitié de tête (6.1) présente un nombre d'ouvertures de passage (10.1, 10.2, 10.3) correspondant au nombre d'ouvertures de passage (9.1, 9.2, 9.3), dans lequel chaque ouverture de passage (10.1, 10.2, 10.3) présente un siège (11.1, 11.2, 11.3) pour une plaque perforée (12.1, 12.2, 12.3), et que la tête d'extrusion (6) présente une seconde moitié de tête (6.2) qui présente un nombre d'ouvertures de passage (13.1, 13.2, 13.3) correspondant au nombre d'ouvertures de passage (10.1, 10.2, 10.3) de la première moitié de tête (6.1), dans lequel chaque ouverture de passage (13.1, 13.2, 13.3) présente un siège (14.1, 14.2, 14.3) pour une des plaques perforées (12.1, 12.2, 12.3) et laquelle seconde moitié de tête (6.2) présente au moins une ouverture de sortie (15) à laquelle se raccorde l'outil d'injection (7).

11. Dispositif d'extrusion selon la revendication 10,
**caractérisé en ce que** la première moitié de tête (6.1) présente une première bride de serrage (17.1) et la seconde moitié de tête (6.2) présente une seconde bride de serrage (17.2), dans lequel la première bride de serrage (17.1) et la seconde bride de serrage (17.2) sont conçues pour maintenir ensemble la première moitié de tête (6.1) et la seconde moitié de tête (6.2) en résistance à la pression au moyen d'un collier de serrage monté, lorsqu'au moins une plaque perforée (12.1, 12.2, 12.3) est insérée entre la première moitié de tête (6.1) et la seconde moitié de tête (6.2) .

12. Dispositif d'extrusion selon la revendication 10 ou 11,
**caractérisé en ce que** la première moitié de tête (6.1) et la seconde moitié de tête (6.2) sont disposées en étant mobiles entre elles de façon à ce que la première moitié de tête (6.1) et la seconde moitié de tête (6.2) soient mobiles en pouvant être séparées l'une de l'autre pour insérer l'au moins une plaque perforée (12.1, 12.2, 12.3) et/ou pour retirer l'au moins une plaque perforée (12.1, 12.2, 12.3).
